Europäisches Patentamt

**European Patent Office**

**Office européen des brevets**

(19)

(11) Veröffentlichungsnummer: **0 082 391**
**B1**

(12) # EUROPÄISCHE PATENTSCHRIFT

(45) Veröffentlichungstag der Patentschrift:
29.05.85

(51) Int. Cl.⁴: **H 02 P 7/00**

(21) Anmeldenummer: **82111266.1**

(22) Anmeldetag: **06.12.82**

(54) **Schaltungsanordnung zur Laststromerfassung in einem Gleichstrom-Umkehrsteller.**

(30) Priorität: **21.12.81 AT 5487/81**

(43) Veröffentlichungstag der Anmeldung:
**29.06.83 Patentblatt 83/26**

(45) Bekanntmachung des Hinweises auf die Patenterteilung:
**29.05.85 Patentblatt 85/22**

(84) Benannte Vertragsstaaten:
**AT CH DE FR IT LI**

(56) Entgegenhaltungen:
**EP - A - 0 023 623**
**DE - A - 1 918 577**
**DE - A - 2 008 244**
**DE - A - 2 818 800**
**DE - A - 2 939 517**
**DE - A - 3 016 512**

(73) Patentinhaber: **Siemens Aktiengesellschaft, Berlin und München Wittelsbacherplatz 2, D-8000 München 2 (DE)**

(72) Erfinder: **Ramiohr, Franz, Heckenweg 7, A-1222 Wien (AT)**
Erfinder: **Spitaler, Wolfgang, Dipl.-Ing., Neulinggasse 15/17, A-1030 Wien (AT)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Beschreibung

Die Erfindung betrifft eine Schaltungsanordnung zur Laststromerfassung in einem Gleichstrom-Umkehrsteller mit einer an eine Versorgungsspannungsquelle angeschlossenen Brückenschaltung mit vier Brückenzweigen, von denen jeder die Antiparallelschaltung eines elektronischen Schalters und eines Freilaufventils aufweist, wobei in zwei Brückenzweigen je ein Meßfühler vorgesehen ist.

Eine solche Schaltungsanordnung ist beispielsweise aus der Zeitschrift »Elektrie« 28 (1974), Seiten 368 bis 370 bekannt. Bei der bekannten Schaltungsanordnung sind als Meßfühler Widerstände in zwei Brückenzweigen vorgesehen, die an die Sammelschiene mit Bezugspotential angeschlossen sind. Bei dieser Schaltungsanordnung wird zwar der Laststrom potentialfrei erfaßt, zur Auswertung benötigt man jedoch eine aufwendige, teurere Elektronik.

Es besteht die Aufgabe, eine Schaltungsanordnung der eingangs genannten Art anzugeben, mit der der Laststrom mit einfachen Mitteln erfaßt werden kann.

Diese Aufgabe wird erfindungsgemäß dadurch gelöst, daß ein Stromwandler mit zwei Primärwicklungen als Meßfühler vorgesehen ist, die gegensinnig in zwei diagonale Brückenzweige geschaltet sind, daß die Sekundärwicklung des Stromwandlers über einen Gleichrichter und einen Bürdenwiderstand mit dem Eingang einer Abtast- und Haltestufe verbunden ist, die mit einem elektronischen Abtastschalter versehen ist und an deren Ausgang der Laststromistwert ansteht und daß in Abhängigkeit von den Steuersignalen für die elektronischen Schalter von zwei mit der gleichen Sammelschiene verbundenen Brückenzweigen über digitale Verknüpfungsglieder der Abtastschalter während einer vorgegebenen Zeitspanne in jedem Zeitraum geschlossen ist, in dem der Laststrom über eine Freilaufdiode zirkuliert.

Bei der erfindungsgemäßen Schaltungsanordnung erfolgt während einer Energieeinspeisung in die Last oder einer Energierückspeisung der Last, beispielsweise eines Gleichstrommotors, d. h. in einem Betriebszustand, in dem der Laststrom über zwei der diagonalen Brückenzweige fließt, keine Erfassung des Laststroms. Dabei tritt nämlich keine Magnetisierung des Wandlerkerns auf, da entweder beide Primärwicklungen vom Strom nicht durchflossen sind oder beide Primärwicklungen des Kerns entgegengesetzt gleich magnetisiert sind, so daß die resultierende Kernmagnetisierung ebenfalls Null ist. Zirkuliert der Laststrom jedoch während einer Aussteuerungspause in einem der beiden Freilaufkreise, so wird er nur über eine der Primärwicklungen des Stromwandlers getrieben, was eine Magnetisierung des Wandlerkerns verursacht. Diese bewirkt in der Sekundärspule einen impulsartigen Signalanstieg. Die Erfassung und Auswertung erfolgt in der Abtast- und Haltestufe. Solche Abtast- und Haltestufen, auch Momentanwertspeicher oder Sample and hold Stufe genannt, sind beispielsweise aus dem Buch »Halbleiterschaltungstechnik«, Springer-Verlag 1974, Seiten 295 und 296 bekannt. Zur Auswertung wird der elektronische Abtastschalter in einem Zeitpunkt geschlossen, in dem der schmale an der Sekundärwicklung anstehende Impuls repräsentativ für den Laststrom ist. Bei dieser Schaltungsanordnung können billige Wechselstromwandler verwendet werden. Die Erfassung des Laststroms erfolgt potentialfrei, da der Meßkreis galvanisch getrennt ist. Außerdem wird eine fortlaufende Messung und Erfassung in den Stromlücken des Gleichstrom-Umkehrstellers durchgeführt.

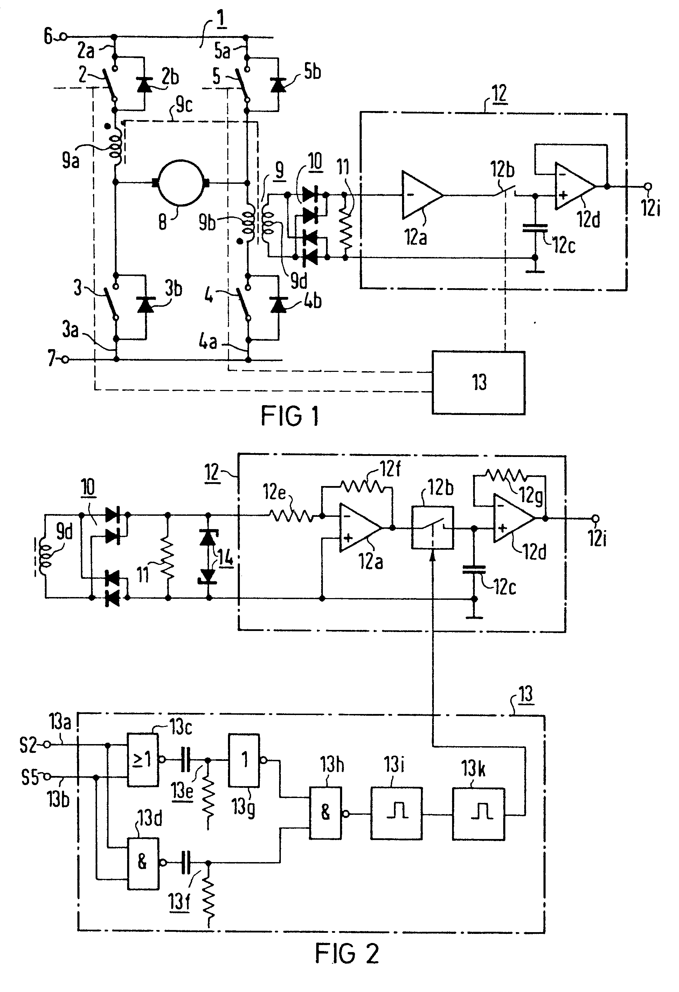

Die erfindungsgemäße Schaltungsanordnung wird im folgenden anhand der Fig. 1 bis 4 beispielhaft näher erläutert.

Fig. 1 zeigt schematisch den Aufbau der erfindungsgemäßen Schaltungsanordnung. Im Leistungsteil 1 des Gleichstrom-Umkehrstellers sind vier elektronische Schalter 2 bis 5 in Brückenschaltung mit Brückenzweigen 2a bis 5a zwischen zwei Eingangsklemmen 6 und 7 angeordnet, an denen die Versorgungs-Gleichspannung ansteht. Die elektronischen Schalter 2 bis 5 können beispielsweise Transistoren sein. Jeder der elektronischen Schalter 2 bis 5 ist mit einer Freilaufdiode 2b bis 5b überbrückt, die entgegengesetzt zur Durchlaßrichtung des zugehörigen elektronischen Schalters gepolt ist. In der Brückenschaltung ist zwischen dem Verbindungspunkt der elektronischen Schalter 2 und 3 und dem Verbindungspunkt der elektronischen Schalter 4 und 5 ein Gleichstrommotor 8 als Last angeschlossen.

Zur Erfassung des Laststroms ist ein Stromwandler 9 mit zwei Primärwicklungen 9a und 9b, einem gemeinsamen Kern 9c und einer Sekundärwicklung 9d vorgesehen. Die beiden Primärwicklungen 9a und 9b sind mit entgegengesetztem Wicklungssinn in diagonale Brückenzweige 2a und 4a geschaltet. Die Sekundärwicklung 9d des Stromwandlers 9 ist über einen Gleichrichter 10 und einen Bürdenwiderstand 11 mit den Eingängen einer Abtast- und Haltestufe 12 verbunden. Bei der schematisch gezeigten Abtast- und Haltestufe 12 ist einem Operationsverstärker 12a ein elektronischer Abtastschalter 12b nachgeschaltet, der beispielsweise ein FET-Schalter sein kann. Der Abtastschalter 12b ist mit dem Speicherkondensator 12c und dem nichtinvertierenden Eingang eines als Impedanzwandler geschalteten Operationsverstärkers 12d verbunden, dessen Ausgang 12i mit dem invertierenden Eingang verbunden ist und an dessen Ausgang 12i der Betrag des Laststromistwert ansteht. Der Abtastschalter 12b wird von einer Logik 13 angesteuert, der die Steuerimpulse S2 und S5 der elektronischen Schalter 2 und 5 zugeführt sind. Auf die Logikschaltung 13, die mit digitalen Verknüpfungsgliedern und Verzögerungsgliedern aufgebaut ist, wird in einem gesonderten Ausführungsbeispiel näher eingegangen.

Zur Erklärung der Wirkungsweise der Schaltungsanordnung nach Fig. 1 ist davon auszugehen, daß die Schalter 2 und 3 bzw. 4 und 5 niemals gleichzeitig geschlossen sein können, da sonst Kurzschluß auftreten würde. Bei Energieeinspeisung oder falls der Motor 8 generatorisch betrieben wird, bei Energierückspeisung fließt daher Strom immer über die Schalter 2 bis 5 diagonaler Brückenzweige bzw. über die entsprechenden Freilaufventile 2b bis 5b. Bei dieser Betriebsweise erfolgt somit keine Magnetisierung des Wandlerkerns 9c, da entweder beide Primärwicklungen vom Strom nicht durchflossen sind, wenn der Strom über die geschlossenen Schalter 3 und 5 fließt oder weil bei Stromfluß über die geschlossenen Schalter 2 und 4 beide Primärwicklungen den Kern entgegengesetzt gleich magnetisieren, so daß die resultierende Kernmagnetisierung ebenfalls Null ist. Geht man beispielsweise davon aus, daß die Schalter 2 und 4 geschlossen waren und wird einer dieser Schalter zur Einleitung einer Pause geöffnet, so wird ein von der Motorinduktivität verursachter Strom im entsprechenden Freilaufkreis über die Freilaufdiode und eine der Primärwicklungen 9a bzw. 9b getrieben. Dieser Strom verursacht eine Magnetisierung des Wandlerkerns 9c, die ihrerseits in der Sekundärspule 9d einen impulsartigen Stromanstieg verursacht. Durch die Logik 13 wird in Abhängigkeit von den Steuersignalen der elektronischen Schalter 2 und 5 der Auswerteschalter 12b der Abtast- und Haltestufe 12 für eine vorgegebene Zeitspanne immer dann geschlossen, wenn der Laststrom in einem der beiden Freilaufkreise zirkuliert. Mit Verzögerungsgliedern ist die Zeitspanne, für die der Abtastschalter 12b geschlossen ist, so vorgegeben und eingestellt, daß die Auswertung in einem Zeitpunkt erfolgt, in dem der schmale Stromimpuls an der Sekundärwicklung 9d des Stromwandlers 9 repräsentativ für den Laststrom ist. Am Ausgang der Abtast- und Haltestufe steht ein Spannungswert an, der dem Betrag des Motorstroms entspricht.

Fig. 2 zeigt ein detailliertes Ausführungsbeispiel des Auswertekreises und der Logik 13. Die Sekundärwicklung 9d des Stromwandlers 9 ist über einen Gleichrichter 10, einen Bürdenwiderstand 11 und begrenzende Z-Dioden 14 entgegengesetzter Polarität dem Eingang der Abtast- und Haltestufe 12 zugeführt. Der Eingang der Abtast- und Haltestufe 12 ist über einen Widerstand 12e mit dem invertierenden Eingang des ersten Operationsverstärkers 12a verbunden, dessen Ausgang über den Widerstand 12f mit dem invertierenden Eingang des Operationsverstärkers 12a verbunden ist und deren nicht invertierender Eingang am Bezugspotential liegt. Dem Ausgang des Operationsverstärkers 12a ist der Auswerteschalter 12b nachgeschaltet, an dessen Ausgang der Speicherkondensator 12c und der nichtinvertierende Eingang des Impedanzwandlers 12d liegt.

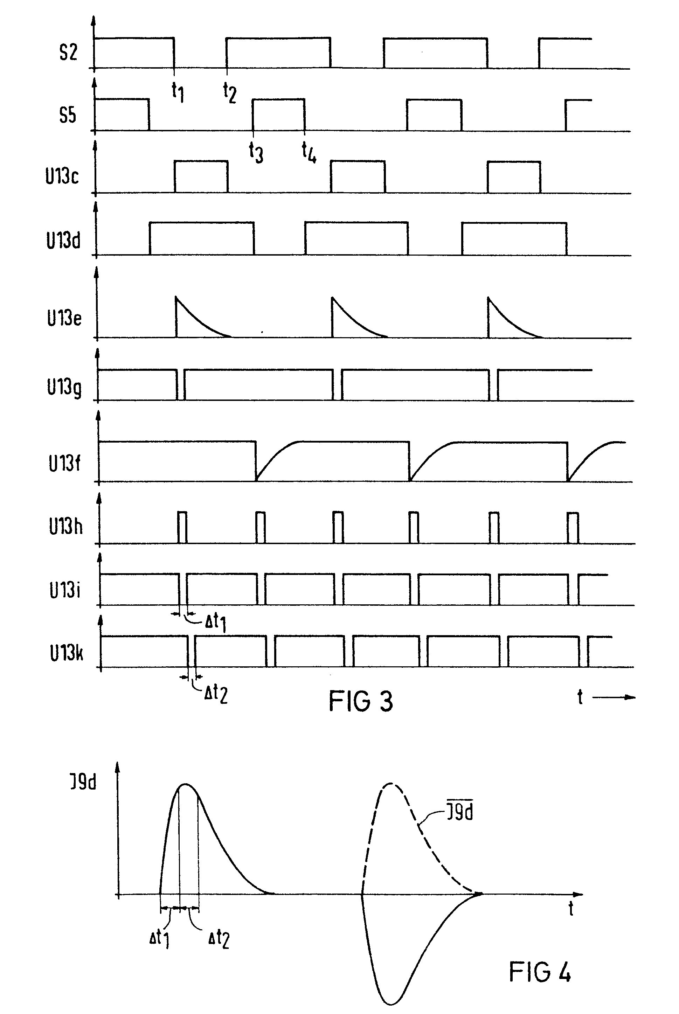

In der Logikschaltung 13 sind die Eingänge 13a und 13b, an denen die Steuersignale S2 und S5 der elektronischen Schalter 2 und 5 anstehen, mit den Eingängen eines NOR-Gliedes 13c und eines NAND-Gliedes 13d verbunden. Dem Ausgang des NOR-Gliedes 13c ist ein RC-Glied 13e als Differenzierglied nachgeschaltet, das mit dem Eingang eines Invertiergliedes 13g verbunden ist, dessen Ausgang mit dem Eingang eines weiteren NAND-Gliedes 13h verbunden ist. Am Ausgang des NAND-Gliedes 13d liegt ein weiteres RC-Glied 13f als Differenzierstufe, die mit dem zweiten Eingang des NAND-Gliedes 13h verbunden ist. Den Ausgängen des NAND-Gliedes 13h sind zwei Verzögerungsstufen 13i und 13k nachgeschaltet, wobei der Ausgang des Verzögerungsgliedes 13k mit dem Steuerungseingang des elektronischen Schalters 12b verbunden ist. Von den Verzögerungsgliedern 13i und 13k wird, ausgelöst von der Vorderflanke des am Ausgang des NAND-Gliedes 13h anstehenden Impulses, jeweils ein verzögerter Impuls vorgegebener Breite abgegeben, womit die Erfassungszeit der Abtast- und Haltestufe 12 während jeder Freilaufperiode eingestellt ist. Die Wirkungsweise der Logikschaltung 13 wird anhand der Fig. 3 und 4 näher erläutert.

In Fig. 3 sind die Steuersignale S2, S5 der elektronischen Schalter 2 und 5 und das jeweilige Ausgangssignal des NOR-Gliedes 13c, des NAND-Gliedes 13d, der Differenziergliedern 13e und 13f, der Invertierstufe 13g, des NAND-Gliedes 13h und der Verzögerungsstufen 13i und 13k über der Zeit t aufgezeichnet. Fig. 4 zeigt den zeitlichen Verlauf des Stromimpulses J9d in der Sekundärwicklung 9d, wenn der Laststrom in einem der Freilaufkreise zirkuliert, wobei gestrichelt das gleichgerichtete Signal gezeigt ist.

Für das folgende wird vorausgesetzt, daß die Steuersignale z. B. S2 und S5 im Zustand »1« den zugehörigen elektronischen Schalter 2 bzw. 5 öffnen und im Zustand »0« schließen. Vom Zeitpunkt $t_1$ bis zum Zeitpunkt $t_2$ zirkuliert daher entsprechend dem Impulsdiagramm nach Fig. 4 der Laststrom im ersten Freilaufkreis, der vom Freilaufventil 2b und dem Schalter 5 gebildet wird. Vom Zeitpunkt $t_2$ bis zum Zeitpunkt $t_3$ fließt der Laststrom über die geschlossenen Schalter 3 und 5. Vom Zeitpunkt $t_3$ bis zum Zeitpunkt $t_4$ zirkuliert hingegen der Laststrom im zweiten Freilaufkreis über den Schalter 3 und die Freilaufdiode 4b. Mit der Vorderflanke jedes Impulses U13c erhält man am Ausgang des Differenziergliedes 13e das Signal U13e, das in der Invertierstufe 13g invertiert wird und am Ausgang des NAND-Gliedes 13h den Impuls U13h erzeugt, dessen Vorderflanke in der ersten Verzögerungsstufe 13i einen Impuls der Länge $\varDelta t_1$ auslöst, der seinerseits mit seiner Rückflanke einen Impuls der Länge $\varDelta t_2$ über die Verzögerungsstufe 13k erzeugt, mit dem der Abtastschalter 12b geschlossen wird. Die Länge $\varDelta t_1$ des Impulses U13i ist, wie Fig. 4 zeigt, an die Anstiegsflanke des Spannungsimpulses U9d angepaßt und die Länge $\varDelta t_2$ des Impulses U13k ist mit einem Bereich vorgegeben, in dem das Maximum des Spannungsimpulses U9d liegt. Beide Impulslängen $\Delta t_1$ und $\Delta t_2$ betragen einige Msec. Damit wird sichergestellt, daß im Zeitraum $\Delta t_2$ ein den Betrag des Istwerts des Laststroms repräsentierender Wert in den Speicherkondensator 12c der Abtast- und Haltestufe 12 eingelesen wird und an deren Ausgang 12i ansteht. In gleicher Weise wird mit der Rückflanke des Impulses U13d ein differenzierter Impuls U13f erhalten, der in analoger Weise einen Impuls U13k auslöst, mit dem der Schalter 12b ebenfalls für die Zeitspanne $\Delta t_2$ geschlossen wird.

## Patentanspruch

Schaltungsanordnung zur Laststromerfassung in einem Gleichstrom-Umkehrsteller mit einer an eine Versorgungsspannungsquelle angeschlossenen Brückenschaltung mit vier Brückenzweigen (2a bis 5a), von denen jeder die Antiparallelschaltung eines elektronischen Schalters (2 bis 5) und eines Freilaufventils (2b bis 5b) aufweist, wobei in zwei Brückenzweigen je ein Meßfühler (9a, 9b) vorgesehen ist, dadurch gekennzeichnet, daß ein Stromwandler (9) mit zwei Primärwicklungen (9a, 9b) als Meßfühler vorgesehen ist, die gegensinnig in zwei diagonale Brückenzweige (2a, 4a) geschaltet sind, daß die Sekundärwicklung (9d) des Stromwandlers (9) über einen Gleichrichter (10) und einen Bürdenwiderstand (11) mit dem Eingang einer Abtast- und Haltestufe (12) verbunden ist, die mit einem elektronischen Abtastschalter (12b) versehen ist und an deren Ausgang (12i) der Laststromistwert ansteht und daß in Abhängigkeit von den Steuersignalen (S2, S5) für die elektronischen Schalter (2, 5) von zwei mit der gleichen Sammelschiene verbundenen Brückenzweigen (2a, 5a) über digitale Verknüpfungsglieder (13c, 13d, 13g, 13h) der Abtastschalter (12b) während einer vorgegebenen Zeitspanne ($\Delta t_2$) in jedem Zeitraum geschlossen ist, in der der Laststrom über eine Freilaufdiode (2b bis 5b) zirkuliert.

## Claim

A circuit arrangement for the registration of the charge current in a reversible d.c. chopper having a bridge circuit of four bridge branches (2a to 5a) connected to a supply voltage source, each of which branches possesses an anti-parallel combination of an electronic switch (2 to 5) and a free-running non-linear component (2b to 4b), where a respective measuring sensor (9a, 9b) is arranged in two bridge branches characterised in that there is provided as a measuring sensor a current transformer (9) having two primary windings (9a, 9b) which are switched in an opposing fashion in two diagonal bridge branches (2a, 4a), that the secondary winding (9d) of the current transformer (9) is connected via a rectifier (10) and a load resistor (11) to the input of a scanning and holding stage (12) which is provided with an electronic scanning switch (12b) and at whose output (12i) the theoretical value of the charge current is present, and that in dependence upon the control signals (S2, S5) for the electronic switches (2, 5) of two bridge branches (2a, 5a) connected to the same bus bar during a predetermined time interval ($\Delta t_2$), the scanning switch (12b) is closed by means of digital logic elements (13c, 13d, 13g, 13h) during each period in which the charge current circulates across a free-running diode (2b to 5b).

## Revendication

Montage pour détecter le courant de charge d'un régulateur-inverseur à courant continu comportant un circuit en pont raccordé à une souroe de tension d'alimentation et possédant quatre branches (2a à 5a), dont chacune représente le montage antiparallèle d'un commutateur électronique (2 à 5) et d'une valve de roue-libre (2b à 5b), un capteur de mesure (9a, 9b) étant prévu respectivement dans deux branches du pont, caractérisé par le fait qu'il est prévu comme capteur de mesure un transformateur d'intensité (9) comportant deux enroulements primaires (9a, 9b) qui sont branchés en sens inverse dans deux branches diagonales (2a, 4a) du pont, que l'enroulement secondaire (9d) du transformateur d'intensité (9) est relié par l'intermédiaire d'un redresseur (10) et d'une résistance de charge (11) à l'entrée d'un étage d'exploration de maintien (12), qui est muni d'un commutateur électronique d'exploration (12b) et à la sortie (12) duquel est présente la valeur réelle du courant de charge, et qu'en fonction des signaux de commande (S2, S5) pour les commutateurs électroniques (2, 5) de deux branches (2a, 5a) du pont, reliées à la même barre omnibus, le commutateur d'exploration (12b) est fermé par l'intermédiaire de circuits logiques numériques (13c; 13d; 13g, 13h), au cours d'une durée prédéterminée ($\Delta t_2$), pendant chaque intervalle de temps pendant lequel le courant de charge traverse une diode de roue-libre (2b à 5b).

FIG 1

FIG 2

5

FIG 3

FIG 4